# EUROPÄISCHE PATENTSCHRIFT

(11) **EP 3 248 746 B1**
(45) Veröffentlichungstag und Bekanntmachung des Hinweises auf die Patenterteilung: **14.09.2022**
(21) Anmeldenummer: 17173031.0
(22) Anmeldetag: 26.05.2017
(51) Int. Cl.: B23Q 35/28, B27D 5/00

(54) **TASTEINRICHTUNG FÜR BEARBEITUNGSAGGREGAT, BEARBEITUNGSVORRICHTUNG UND VERFAHREN ZUM ABTASTEN**
SENSOR DEVICE FOR MACHINING UNIT, MACHINING TOOL AND METHOD OF SCANNING
DISPOSITIF PALPEUR POUR MODULE D'USINAGE, DISPOSITIF D'USINAGE ET PROCÉDÉ DE PALPAGE

(30) Priorität: 27.05.2016 DE 102016209220
(43) Veröffentlichungstag der Anmeldung: 29.11.2017
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 0 587 102
- EP-A1- 2 527 110
- DE-U- 6 605 022
- DE-U- 7 315 666
- US-A1- 2013 263 709

## Beschreibung

### Gebiet der Erfindung

Die Erfindung betrifft eine Tasteinrichtung für Bearbeitungsvorrichtungen, insbesondere Bearbeitungsaggregate zur Bearbeitung von bevorzugt plattenförmigen Werkstücken, eine Bearbeitungsvorrichtung und ein Verfahren zum Abtasten von Werkstückoberflächen anhand der erfindungsgemäßen Tasteinrichtung.

### Stand derTechnik

Üblicherweise hat eine Tastrolle die Aufgabe, Werkstückoberflächen oder Werkstückprofile beim Bearbeiten eines Werkstücks, wie z.B. beim Formfräsen abzutasten, und das erfasste Werkstück (-profil) einer Bearbeitungsvorrichtung zur Verfügung zu stellen. Dies ermöglicht eine Führung eines Werkzeugs der Bearbeitungsvorrichtung, wie z.B. eines Fräsers, entlang des Werkstücks.

Beispielsweise kann dadurch erreicht werden, dass eine Werkstückkante eines Werkstücks formbearbeitet wird, wie z.B. Anfasen, Radiusfräsen, Schleifen oder Finishen (z.B. Abziehen mit einer Ziehklinge). Die Tastrolle ist in der Regel zum Werkzeug je nach Einsatzfall in eine, zwei oder drei Richtungen verstellbar. Tastrollen bieten den Vorteil, dass sie bei Kontakt mit dem abzutastenden Werkstück nur eine Rollreibung aufweisen, also keine Haftreibung und sie somit keine Glanzspuren auf hochwertigen Oberflächen hinterlassen. Jedoch können Tastrollen nicht an Werkstücken verwendet werden, die im Tastbereich Unstetigkeiten wie Nuten, Bohrungen, jegliche Art von Sprüngen, Vertiefungen usw. aufweisen, da dadurch insbesondere bei hohen Vorschubgeschwindigkeiten ein störender Anfahrstoß auftritt.

Aus diesem Grund werden ferner Tastschuhe (Gleitschuhe) in bekannten Bearbeitungsvorrichtungen eingesetzt. Tastschuhe liegen im Gegensatz zu Tastrollen flächig auf dem Werkstück auf, weshalb sie insbesondere bei Werkstücken mit Nuten, Bohrungen, spitz- oder stumpfwinkligen Enden im Bereich der Bearbeitung (im Abtastbereich) verwendet werden. Tastschuhe bieten ferner den Vorteil, dass beim Vorsehen von Anlaufschrägen ein sanftes Anfahren, insbesondere bei hohen Vorschubgeschwindigkeiten, realisiert werden kann. Aufgrund der flächigen Auflage auf dem Werkstück weisen jedoch Tastschuhe eine Haftreibung mit dem abzutastenden Werkstück auf, was oft zu Kontaktspuren auf dem Werkstück, insbesondere Glanzspuren bei empfindlichen Oberflächen (z.B. Lack- oder Glanzlackoberflächen) und Verschmutzungsspuren bei z.B. Schmutz- bzw. Leimpartikeln auf der Oberfläche, führt.

Um diese Nachteile auszugleichen, gibt es im Stand der Technik beispielsweise Taster mit mehreren Tastrollen, die in Bearbeitungsrichtung hintereinander angeordnet sind und zu der Werkstückoberfläche unterschiedliche Abstände aufweisen, womit ein sanfteres Anfahren realisiert werden soll. Dies liefert jedoch keine äußerst befriedigenden Resultate, insbesondere besteht weiterhin das Problem von Anfahrstößen, wenn Nuten oder Bohrungen in der Werkstückoberfläche vorhanden sind.

Ferner beschreibt die DE 66 05 022 U eine Z Vorrichtung gemäß dem Oberbegriff des Anspruchs 1.

### Darstellung der Erfindung

Aufgabe vorliegender Erfindung ist es daher, eine Tasteinrichtung bereitzustellen, die sowohl Werkstücke, die eine glatte Oberfläche im Tastbereich aufweisen, sowie Werkstücke, die Unstetigkeiten wie Nuten, Bohrungen, Absätze, usw. im Tastbereich aufweisen, zuverlässig abtasten kann, ohne Kontaktspuren auf der Werkstückoberfläche zu hinterlassen.

Die Aufgabe wird gelöst durch eine Tasteinrichtung nach Anspruch 1, eine Bearbeitungsvorrichtung nach Anspruch 12 sowie ein Bearbeitungsverfahren nach Anspruch 13. Besonders bevorzugte Weiterbildungen der Erfindung sind in den abhängigen Ansprüchen angegeben.

Einer der Kerngedanken der vorliegenden Erfindung ist es, eine Tasteinrichtung zum Abtasten eines Abtastbereichs einer Werkstückoberfläche bzw. einer Werkstückkante eines Werkstücks bereitzustellen, bei der eine Tastrolleneinrichtung mit mindestens einer Tastrolle und eine Tastschuheinrichtung mit mindestens einem Tastschuh in einer Aufnahmeeinrichtung (10) aufgenommen sind.

Mittels der vorgeschlagenen Tasteinrichtung können somit Werkstücke mit einer glatten Oberfläche, also ohne Nuten, Bohrungen, größeren Absätzen, und dergleichen, aber auch Werkstücke mit einer unstetigen Werkstückoberfläche, d.h., die Oberfläche weist Nuten, Bohrungen, Absätze, Vertiefungen usw. im Abtastbereich auf, sicher und zuverlässig abgetastet werden, ohne Kontaktspuren auf der Werkstückoberfläche zu hinterlassen und ohne Anlaufstöße zu verursachen, wenn die Oberfläche vorgenannte Oberflächenbearbeitungen aufweist.

Gemäß der Erfindung umfasst die Tasteinrichtung für Bearbeitungsvorrichtungen, insbesondere Bearbeitungsaggregate zur Bearbeitung von bevorzugt plattenförmigen Werkstücken, die bevorzugt zumindest abschnittsweise aus Holz, Holzwerkstoff und/oder Kunststoff bestehen, eine Tastrolleneinrichtung, die mindestens eine Tastrolle aufweist, eine Tastschuheinrichtung, die mindestens einen Tastschuh aufweist , eine Zustelleinrichtung und eine Aufnahmeeinrichtung, die die Tastrolleneinrichtung und die Tastschuheinrichtung aufnimmt, wobei die mindestens eine Tastrolle oder der mindestens eine Tastschuh mittels Z der Zustelleinrichtung in Richtung der Werkstückoberfläche zustellbar ist, insbesondere ein- und ausgerückt werden kann, sodass die Tastrolleneinrichtung und/oder die Tastschuheinrichtung derart verstellbar sind, dass nur die mindestens eine Tastrolle mit der Werkstückoberfläche in Kontakt kommt oder dass nur der mindestens eine Tastschuh mit der Werkstückoberfläche in Kontakt kommt, oder dass beide mit der Werkstückoberfläche zumindest zeitweise simultan in Kontakt kommen.

Damit ist es möglich, die relative Position der mindestens einen Tastrolle in Richtung Werkstückoberfläche in Bezug auf den mindestens einen Tastschuh zu verändern, was es ermöglicht, entweder die Tastrolle oder den Tastschuh in Einsatz zu bringen, d.h. in Kontakt mit der Werkstückoberfläche. Insbesondere ist es dadurch möglich, im Falle dass beide Tasteinheiten genutzt werden sollen, genau einzustellen, ab wann der Tastschuh mit der Oberfläche in Kontakt kommen soll. Konkret gesagt, wie weit z.B. die Rolle in eine Bohrung eintauchen kann, oder wie groß ein Absatz auf der Werkstückoberfläche sein kann, ohne dass der Tastschuh in Einsatz kommt.

Gemäß einer weiteren Ausführungsform sind die Tastrolleneinrichtung, die Tastschuheinrichtung und die Aufnahmeeinrichtung als separate Bauteile ausgeführt. Damit ist es möglich, die Komplexität der einzelnen Einrichtungen gering zu halten und somit ebenfalls die Herstellungskosten gering zu halten. Ferner kann somit auf einfache Weise ein modulares Baukastensystem aufgebaut werden. Ebenfalls wird dadurch die Wartung der Tasteinrichtung vereinfacht.

Des Weiteren ist es bevorzugt, einen Tastbereich der mindestens einen Tastrolle und einen Tastbereich des mindestens einen Tastschuhs quer zu einer Abtastrichtung der Tasteinrichtung nebeneinander und/oder in Abtastrichtung hintereinander anzuordnen. Hierbei ist unter der Abtastrichtung die Richtung zu verstehen, in welcher das zu abtastende Werkstück der Tasteinrichtung zugeführt wird. D.h., die Abtastrichtung ist die Richtung, in der die Abtastung des Werkstücks erfolgt.

Ferner können die Tastrolleneinrichtung und die Tastschuheinrichtung dazu eingerichtet sein, einen gemeinsamen Abtastbereich einer Werkstückoberfläche abtasten zu können. Hierbei ist unter "gemeinsamen Abtastbereich" ein Bereich zu verstehen, der auf der Werkstückoberfläche des zu abtastenden Werkstücks sich in Tastrichtung erstreckt, und von beiden Tasteinrichtungen abgetastet werden kann.

Auf diese Weise wird eine Tasteinrichtung zur Verfügung gestellt, mit der eine Werkstückoberfläche (-profil) eines zu bearbeitenden Werkstücks anhand einer Tastrolle und eines Tastschuhs abgetastet werden kann. Anhand der bereitgestellten Tasteinrichtung ist es möglich, entsprechend des zu abtastenden Werkstücks, d.h. entsprechend den Oberflächeneigenschaften des Werkstücks, die ideale Abtastung in Einsatz zu bringen.

Ferner können die Tastrolleneinrichtung und die Tastschuheinrichtung dazu eingerichtet sein, dass sie den gemeinsamen Abtastbereich zumindest zeitweise simultan abtasten können.

Wenn also Werkstücke bearbeitet werden sollen, d.h. abgetastet werden sollen, die eine typische Oberflächeneigenschaft für einen Tastschuh aufweisen, also Unstetigkeiten wie Nuten, Bohrungen, Absätze, Vertiefungen usw. im Abtastbereich vorhanden sind, und keine Gefahr hinsichtlich Kontaktspuren besteht, kann lediglich der mindestens eine Tastschuh in Einsatz gebracht werden, und die mindestens eine Tastrolle inaktiv gemacht werden, also nicht mit dem Werkstück in Kontakt gebracht werden.

Andererseits, wenn die zu abtastenden Werkstücke eine typische Oberflächeneigenschaft für eine Tastrolle aufweisen, also keine Oberflächenbearbeitungen wie Nuten, Vertiefungen und Bohrungen im Abtastbereich vorhanden sind, und die Oberfläche gegebenenfalls hochwertig veredelt ist, wie z.B. lackiert oder glanzlackiert, kann lediglich die mindestens eine Tastrolle in Einsatz gebracht werden, und der mindestens eine Tastschuh inaktiv gemacht werden, also nicht mit dem Werkstück in Kontakt gebracht werden.

Falls das Werkstück eine Oberflächeneigenschaft aufweist, die bei der Verwendung nur einer Abtastart, z.B. nur der Tastrolle, keine befriedigenden Resultate zulässt, wie z.B. eine Werkstückoberfläche, die Unstetigkeiten wie Nuten, Bohrungen, Absätze, Vertiefungen und dergleichen aufweist und zusätzlich eine Glanzlackierung aufweist oder Verschmutzungsspuren aufgrund von Leimpartikeln auf der Oberfläche entstehen können, besteht die Möglichkeit, beide Tasteinrichtungen zumindest zeitweise simultan bzw. gleichzeitig in Einsatz zu bringen. D.h., die mindestens eine Tastrolle und der mindestens eine Tastschuh sind so eingerichtet, dass sie beide mit der Werkstückoberfläche zumindest zeitweise simultan in Kontakt kommen können. Konkret, kann zum Beispiel die mindestens eine Tastrolle so eingerichtet sein, dass sie mit der Werkstückoberfläche in stetigem Kontakt ist, wohingegen der mindestens eine Tastschuh so eingerichtet ist, dass er lediglich mit der Werkstückoberfläche in Kontakt kommt, wenn die Werkstückoberfläche Unstetigkeiten wie z.B. Absätze, Vertiefungen oder spitz- oder stumpfwinklige Enden aufweist.

Gemäß einer bevorzugten Ausführungsform kann die Zustelleinrichtung pneumatisch, hydraulisch, elektrisch, motorisch, magnetisch und/oder manuell betätigt werden.

Ferner können die Tastrolleneinrichtung und/oder die Tastschuheinrichtung so ausgebildet sein, dass die mindestens eine Tastrolle und/oder der mindestens eine Tastschuh in etwa parallel zur Werkstückoberfläche verstellbar sind. Auf diese Weise ist es ebenfalls möglich, die mindestens eine Tastrolle in ihrer Relativposition in Richtung Oberfläche des abzutastenden Werkstücks zum mindestens einen Tastschuh zu verstellen.

Entsprechend der Bearbeitungsvorrichtung, insbesondere des Bearbeitungsaggregats, an welches die Tasteinrichtung zum Einsatz kommen soll, ist es möglich, die Zustellung pneumatisch, hydraulisch, elektrisch, motorisch, magnetisch und/oder manuell zu realisieren. Falls z.B. lediglich eine Luftversorgung am Bearbeitungsaggregat vorhanden ist, kann die Zustellung pneumatisch erfolgen. Ferner kann die Art der Zustellung abhängig von den Bearbeitungsparametern, wie z.B. Kräfte die auf die Tasteinrichtung wirken, gewählt werden.

Gemäß einer weiteren Ausführungsform vorliegender Erfindung ist die mindestens eine Tastrolle oder der mindestens eine Tastschuh mittels der Zustelleinrichtung in Form einer Schwenkbewegung oder einer translatorischen Bewegung an das Werkstück zustellbar. Hierbei kann wie oben bereits geschildert, die Schwenkbewegung oder die translatorische Bewegung pneumatisch, hydraulisch, elektrisch, motorisch, magnetisch und/oder manuell angetrieben werden bzw. erfolgen.

Ferner kann die translatorische Bewegung senkrecht zur Werkstückoberfläche oder schräg zur Werkstückoberfläche erfolgen. Falls zum Beispiel eine motorische Zustellung in Form einer translatorischen Bewegung erfolgt, kann die Zustellbewegung anhand einer Spindel umgesetzt werden und zusätzlich zur Versteifung eine Führung vorgesehen sein. Eine schräge Zustellung kann anhand eines Parallelogramms oder einer Keilverschiebung realisiert werden, was den Vorteil hat, dass geringere Kräfte auf den Antrieb wirken. Einfacher kann die Zustellung anhand eines Schwenkmechanismus realisiert werden, der entweder manuell oder pneumatisch betätigt wird.

In diesem Fall weist die Tastrolleneinrichtung, insbesondere die Zustelleinrichtung bevorzugt einen Schwenkarm auf, mit dem die mindestens eine Tastrolle schwenkbar an der Tastschuheinrichtung oder der mindestens eine Tastschuh schwenkbar an der Tastrolleneinrichtung gelagert ist.

Um die oben bereits erwähnte Zustellung der Tastrolle bzw. des Tastschuhs, insbesondere die Einstellung der relativen Position der Tastrolle bzw. des Tastschuhs in der eingerückten Position zu erleichtern, kann die Tastrolleneinrichtung bzw. die Tastschuheinrichtung zwei einstellbare Anschläge aufweisen, mit welchen jeweils die Einrückposition bzw. die Ausrückposition der mindestens einen Tastrolle bzw. des mindestens einen Tastschuhs definiert werden kann. Soll ein Einrücken bzw. Ausrücken der Tastrolle bzw. des Tastschuhs erfolgen, wird die Tastrolle bzw. der Tastschuh z.B. manuell oder pneumatisch gegen den jeweiligen Anschlag gedrückt, womit eine einfache Zustellung bzw. ein einfaches Ein- und Ausrücken der Tastrolle bzw. des Tastschuhs realisiert werden kann. Soll hingegen eine feinere Justierung (Einstellung der relativen Position der mindestens einen Tastrolle zu dem mindesten einen Tastschuh) realisiert werden, d.h. Zwischenstellungen sind erwünscht, ist eine motorische Realisierung der Zustelleinrichtung mit Hemmmechanismus vorteilhaft. Dies ist insbesondere vorteilhaft, wenn während des Abtastens eine Verstellung vorgenommen werden soll, z.B. zwischen verschiedenen Abtastbereichen eines Werkstücks.

Gemäß einer weiteren Ausführungsform vorliegender Erfindung ist die mindestens eine Tastrolle oder der mindestens eine Tastschuh in Richtung Werkstück vorspannbar, insbesondere anhand einer Feder vorspannbar. Damit kann der Tastrolle eine bestimmte Elastizität verliehen werden, wodurch kleinere Unebenheiten der Werkstückoberfläche abgefangen und gedämpft werden können. Dies trägt zu einer stabileren Abtastung bei.

Wenn aufgrund der Werkstückoberflächencharakteristik lediglich eine Abtastung anhand der Tastrolle erfolgen soll, ist die mindestens eine Tastrolle bevorzugt in eine eingerückte Position gebracht, womit sie in Richtung Werkstück gesehen vor dem Tastschuh angeordnet ist, d.h., die Tastrolle weist einen geringeren Abstand zum Werkstück auf als der Tastschuh, wobei die mindestens eine Tastrolle (11) bevorzugt bis 1,0 mm, weiter bevorzugt 0,05 mm bis 0,5 mm und besonders bevorzugt 0,1 bis 0,2 mm in Bezug auf den Tastschuh hervorsteht. Hierbei wird von dem Abstand zwischen den jeweiligen Kontaktflächen der Tastrolle und des Tastschuhs, die mit der Werkstückoberfläche in Kontakt gebracht werden können, gesprochen.

Mit dieser Konfiguration ist es möglich, dass die Werkstückoberfläche bzw. die Werkstückkante hauptsächlich von der Tastrolle abgetastet wird, und lediglich wenn Unebenheiten auf der Werkstückoberfläche vorhanden sind, oder z.B. ein neues Werkstück angefahren wird, der Tastschuh mit der Werkstückoberfläche in Kontakt kommt. Wird z.B. die Einstellung so vorgenommen, dass die Tastrolle lediglich 0,1 mm vorsteht, übernimmt bereits bei kleinen Absätzen, die größer sind als 0,1 mm, der Tastschuh eine Einlauffunktion, was Anlaufstöße verhindert bzw. vermindert.

Andererseits, wenn aufgrund der Werkstückoberflächencharakteristik lediglich eine Abtastung anhand des mindestens einen Tastschuhs erfolgen soll, ist die mindestens eine Tastrolle bevorzugt in eine ausgerückte Position gebracht, womit sie in Richtung Werkstück gesehen hinter dem Tastschuh angeordnet ist, d.h., die Tastrolle weist einen größeren Abstand zu dem Werkstück auf als der Tastschuh, wobei die mindestens eine Tastrolle bevorzugt 0,1 mm in Bezug auf den Tastschuh zurücksteht.

Da der Tastschuh relativ steif ausgebildet ist, ist ein Zurückziehen der Tastrolle von nur 0,1 mm ausreichend, um sicherzustellen, dass lediglich der Tastschuh mit der Werkstückoberfläche in Kontakt kommen kann. Andererseits, aufgrund des geringen Abstands kann die Tastrolle falls notwendig bzw. gewünscht, schnell mit der Werkstückoberfläche in Kontakt gebracht werden.

Ferner können die Tastrolleneinrichtung und die Tastschuheinrichtung mittels der Aufnahmeeinrichtung an einem Bearbeitungsaggregat befestigt werden. Hierzu weist die Aufnahmeeinrichtung Befestigungsmittel auf, mittels der die Aufnahmeeinrichtung an einem Bearbeitungsaggregat befestigt werden kann. Damit kann die Tasteinrichtung direkt mit dem Bearbeitungsaggregat an die Werkstückoberfläche zugestellt werden, und es kann ein möglicher Übertragungsfehler, der bei einer indirekten, also separaten Zustellung der Tasteinrichtung entstehen könnte, ausgeschlossen werden.

Des Weiteren ist bevorzugt eine Bearbeitungsvorrichtung, insbesondere ein Bearbeitungsaggregat zur Bearbeitung von bevorzugt plattenförmigen Werkstücken, die bevorzugt zumindest abschnittsweise aus Holz, Holzwerkstoff und/oder Kunststoff bestehen, mit einer wie oben beschriebenen Tasteinrichtung ausgestattet.

Auf diese Weise wird eine Bearbeitungsvorrichtung mit einer Tasteinrichtung zur Verfügung gestellt, mit der eine Werkstückoberfläche bzw. ein Werkstückprofil eines zu bearbeitenden Werkstücks anhand einer Tastrolle und eines Tastschuhs abgetastet werden kann. Anhand der bereitgestellten Bearbeitungsvorrichtung ist es möglich, entsprechend des zu abtastenden Werkstücks, d.h. entsprechend den Oberflächeneigenschaften des Werkstücks, die ideale Abtastung in Einsatz zu bringen.

Ferner betrifft die vorliegende Erfindung ein Verfahren mit den Merkmalen des Anspruchs 13.

Die Auswahl der mindestens einen Tasteinrichtung erfolgt bevorzugt nach mindestens einem der nachfolgenden Kriterien: Oberflächeneigenschaft des Werkstücks, Materialeigenschaft des Werkstücks, Größendimensionen des Werkstücks, Vorschubgeschwindigkeit des Werkstücks oder eines Bearbeitungsaggregates, an dem die Tasteinrichtung befestig ist, Vorhandensein von Schmutzpartikeln, Leimpartikeln, und dergleichen auf der abzutastenden Werkstückoberfläche, Vorhandensein von Unstetigkeiten auf der Werkstückoberfläche usw.

Bevorzugt erfolgt gemäß dem Verfahren das Zustellen der mindestens einen Tastrolle und/oder des mindestens einen Tastschuhs zu der Werkstückoberfläche während eines Produktionswechsels, bei einem Heranfahren an das Werkstück und/oder während des Abtastens der Werkstückoberfläche.

Auf diese Weise ist es z. B. möglich, ein Werkstück, das größtenteils keine Oberflächenbearbeitungen wie Nuten, Bohrungen oder Absätze im Abtastbereich aufweist, überwiegend nur mit der Tastrolle abzutasten, und lediglich in den Bereichen, in welchen z.B. Bohrungen oder Absätze vorhanden sind, den Tastschuh zusätzlich mit dem Werkstück in Kontakt zu bringen.

### Kurze Beschreibung der Figuren

- Figur 1: zeigt eine isometrische Darstellung einer Ausführungsform der Tasteinrichtung vorliegender Erfindung von vorne,
- Figur 2: zeigt eine Ansicht von unten auf die Tasteinrichtung gemäß einer Ausführungsform, wobei die Tastrolle in den Tastschuh integriert ist,
- Figur 3: zeigt eine isometrische Ansicht auf die Tasteinrichtung gemäß einer Ausführungsform von schräg unten,
- Figur 4: zeigt eine Ansicht von vorne auf den Schwenkarm der Tastrolleneinrichtung gemäß einer Ausführungsform, und
- Fig. 5a, 5b u. 5c: dienen zur Illustration eines Tastvorgangs, bei dem beide Tastsysteme zweitweise simultan in Einsatz gebracht werden.

### Beschreibung der bevorzugten Ausführungsform

Nachfolgend werden unter Bezugnahme auf die beigefügten Figuren bevorzugte Ausführungsformen der vorliegenden Erfindung beschrieben. Weitere in diesem Zusammenhang genannte Varianten und Modifikationen einzelner Merkmale können jeweils miteinander kombiniert werden, um neue Ausführungsformen auszubilden.

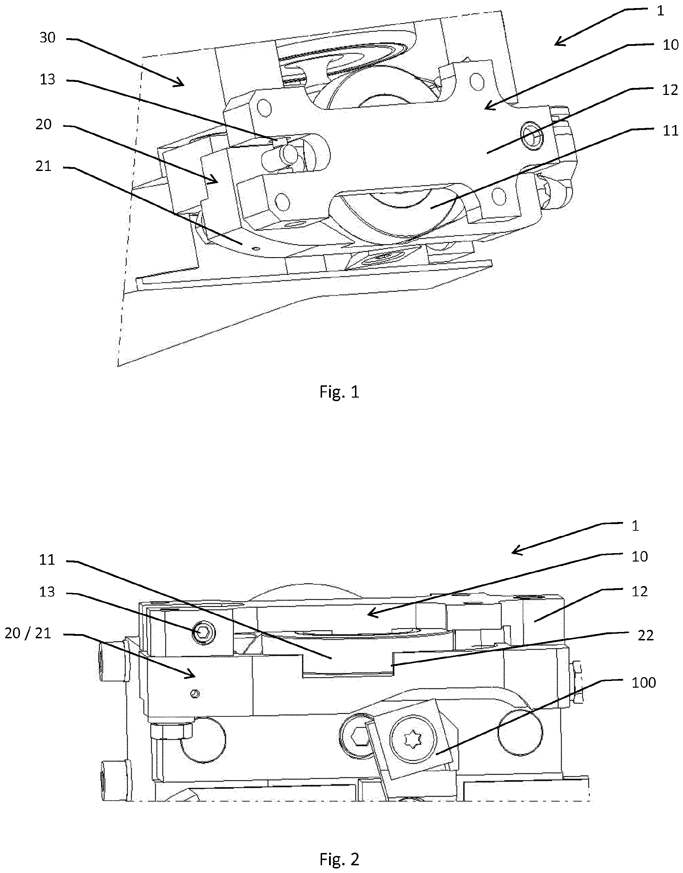

Fig. 1 zeigt eine isometrische Darstellung der Ausführungsform der Tasteinrichtung (1) vorliegender Erfindung von vorne. Wie der Fig. 1 entnommen werden kann, weist die Tasteinrichtung (1) eine Tastrolleneinrichtung (10) mit einer Tastrolle (11) und eine Tastschuheinrichtung (20) mit einem Tastschuh (21) auf. Ferner weist die Tasteinrichtung (1) eine Aufnahmeeinrichtung (30) auf, die die Tastrolleneinrichtung (10) und die Tastschuheinrichtung (20) aufnimmt und anhand der beide Einrichtungen (10, 20) zum Beispiel an ein Bearbeitungsaggregat zur Bearbeitung von bevorzugt plattenförmigen Werkstücken befestigt werden können. Das Bearbeitungsaggregat und die Aufnahmeeinrichtung (30) sind in Fig. 1 lediglich im Hintergrund lediglich angedeutet.

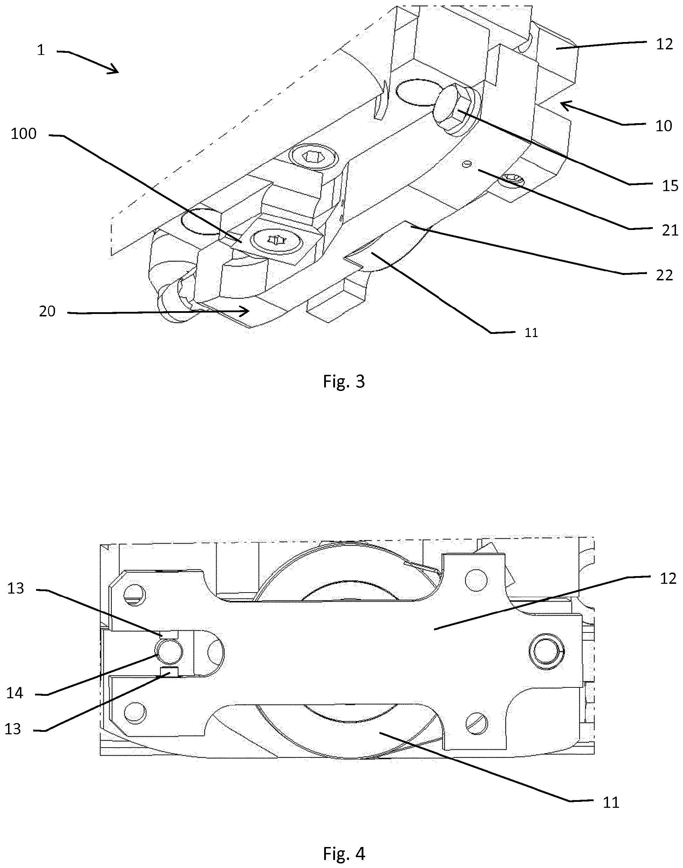

Wie der Fig. 1 des Weiteren entnommen werden kann, weist die Tastrolleneinrichtung (10) einen Schwenkarm (12) und eine mittels des Schwenkarms (12) drehbar gelagerte Tastrolle (11) auf. In der dargestellten Ausführungsform ist der Schwenkarm (12) wiederrum schwenkbar an der Tastschuheinrichtung (20) gelagert, kann jedoch zum Beispiel auch an der Aufnahmeeinrichtung (30) direkt gelagert werden. Da in der gezeigten Ausführungsform die Verstellung der Relativposition zwischen dem Tastschuh (21) der Tastschuheinrichtung (20) und der Tastrolle (11) manuell durch entsprechendes Schwenken des Schwenkarms (12) erfolgt, ist es ausreichend den Schwenkarm (12) mittels einer Gleitbuchse zu lagern. Bei vorliegender Ausführungsform ist der Tastschuh (21) nicht starr, d.h. verstellbar an der Aufnahmeeinrichtung (30) befestigt, und die Tastrolle (11) mittels dem schwenkbaren Schwenkarm (12) verstellbar. In dargestellter Ausführungsform erfolgt die Einstellung der Relativposition der Tastrolle (11) wie in Fig. 1 gezeigt anhand zwei einstellbaren Anschlägen (13), welche in Fig. 4 noch deutlicher dargestellt sind. Bei den Anschlägen (13) kann es sich um Federnde Druckstücke mit Innensechskant handeln, womit auf einfache Weise die Verstellung vorgenommen werden kann, und gleichzeitig der Tastrolle (11) bzw. der Lagerung der Tastrolle (11) eine definierte Elastizität gegeben werden kann, wodurch die Abtastung durch die Tastrolle gedämpft und somit stabiler erfolgt.

Wie in der Fig. 4 des Weiteren gezeigt, kann zwischen dem unteren Anschlag (13) und einem Zentrierbolzen (14), der als Gegenanschlag dient und auf welchem der obere Anschlag (13) aufliegt, ein definierter Spalt vorgesehen werden, welcher der Tastrolle (11) ebenfalls Raum zum Dämpfen von Unebenheiten oder Unstetigkeiten auf der Werkstückoberfläche gibt. Falls es sich bei den Anschlägen (13) um starre Madenschrauben handelt, kann der Schwenkarm (12) mittels einer nicht dargestellten Feder gegen den oberen Anschlag (13) vorgespannt werden. Dies bietet ebenfalls die Möglichkeit der Tastrolle eine spezifische Elastizität zu erteilen.

Wie der Fig. 1 ferner zu entnehmen ist, wird der Tastschuh (21) bevorzugt mit einer Einlaufschräge versehen, welche in Form einer Einlauffase oder wie dargestellt in Form einer Abrundung ausgebildet werden kann.

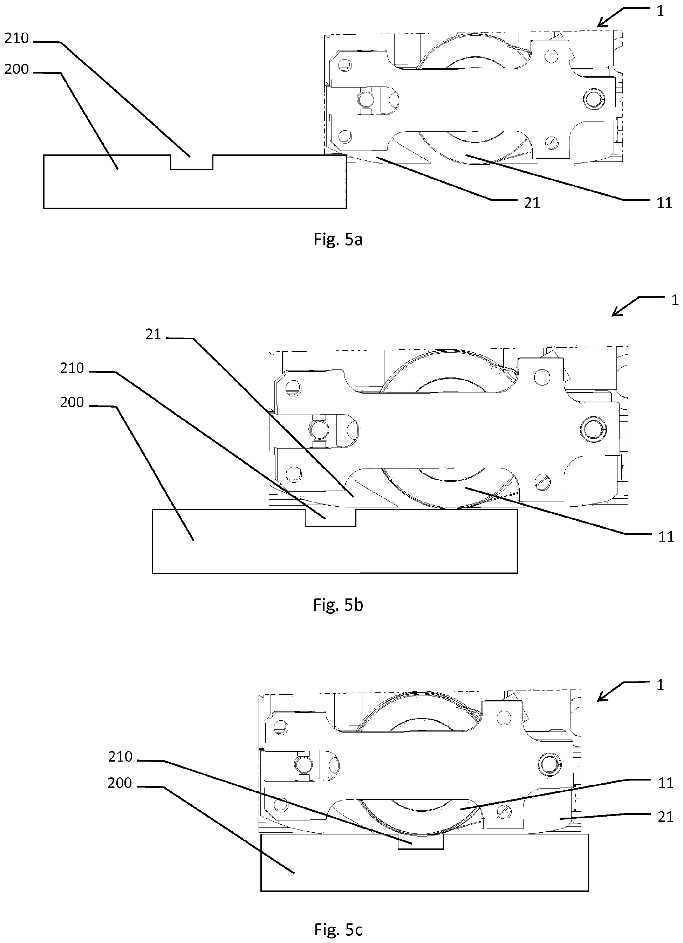

In der Fig. 2 ist die Tasteinrichtung (1) der Fig. 1 von unten dargestellt, welche die räumliche Anordnung von Tastschuh (21) und Tastrolle (11) weiter verdeutlicht. Wie die Fig. 2 ebenfalls zeigt, ist es möglich, den Tastschuh (21) mit einer Ausnehmung (22) zu versehen, durch welche die Tastrolle (11) in Richtung des abzutastenden Werkstücks (200), wie später anhand den Fig. 5a bis 5c noch detaillierter beschrieben, hindurch ragen kann. Zusätzlich ist zur Veranschaulichung in der Fig. 2 noch ein Schneidwerkzeug 100 des Bearbeitungsaggregates dargestellt. Ebenfalls kann der Fig. 2 entnommen werden, dass zur manuellen Einstellung der Relativposition der Tastrolle (11) die Anschläge (13) mit einem Innensechskant versehen sind.

Fig. 3 zeigt zur weiteren Verdeutlichung die Tasteinrichtung (1) aus Fig. 1 in einer isometrischen Ansicht von unten und von hinten, wodurch insbesondere das Werkzeug (100) gut zu erkennen ist. Ferner ist der Fig. 3 eine Spannschraube (15) zu entnehmen, anhand welcher falls gewünscht nach erfolgter Einstellung der Relativposition zwischen Tastrolle (11) und Tastschuh (21) der Schwenkarm (12) der Tastrolleneinrichtung (10) fixiert werden kann, womit die Tastrolle (11) starr fixiert wird. Des Weiteren zeigt die Fig. 3 ebenfalls die Ausnehmung (22) des Tastschuhs (21) durch welchen die Tastrolle (11) nach unten in Richtung Werkstück (200) vorstehen kann.

Des Weiteren illustrieren die Fig. 5a bis 5c einen Abtastvorgang eines Werkstücks (200), bei dem beide Tasteinrichtungen, die Tastrolleneinrichtung (10) sowie die Tastschuheinrichtung (20) mit dem zu abtastenden Werkstück (200) in Kontakt gebracht werden, insbesondere zeitweise simultan mit der Oberfläche des Werkstücks (200) in Kontakt kommen. Zur Verdeutlichung eines möglichen Tastvorgangs wurde die Oberfläche des Werkstücks (200) mit einer Nut (210) versehen, welche sich innerhalb des Abtastbereichs befindet.

Hierbei zeigt die Fig. 5a den Zeitpunkt der Abtastung, bei welchem die Tasteinrichtung (1) mit dem Werkstück (200) gerade in Kontakt kommt. Das Werkstück wird hierbei von links der Tasteinrichtung (1) zugeführt. Entsprechend verläuft die Abtastrichtung in den Fig. 5a bis 5c von rechts nach links. Wie der Fig. 5a entnommen werden kann, erfolgt der Erstkontakt zwischen Tasteinrichtung (1) und Werkstück (200) anhand der Einlaufschräge des Tastschuhs (21), wodurch ein sanftes Anfahren des Werkstücks (200) ohne Anfahrstoß ermöglicht wird. Wie der Fig. 5a ferner entnommen werden kann, steht die Tastrolle 11 minimal nach unten über den Tastschuh (21) in Richtung Werkstück (21) vor. Anhand der Einlaufschräge wird die Tasteinrichtung (1) soweit nach oben gehoben, dass der Tastschuh (21) flächig oder ballig auf dem Werkstück aufliegt, und somit lediglich ein geringer Absatz zwischen Tastrolle (11) und Werkstückoberfläche vorliegt, welcher genau dem eingestellten Maß entspricht, um wieviel die Tastrolle (11) in Richtung Werkstück (200) über den Tastschuh (21) hervorsteht.

Fig. 5b zeigt den Zustand, in dem die Tastrolle (11) mit dem Werkstück (200) in Kontakt gelangt ist, und somit die Abtastung mittels der Tastrolle (11) alleine erfolgt. Wie dargestellt, liegt kein Kontakt zwischen Werkstück (200) und Tastschuh (21) vor, da die Tastrolle derart eingestellt ist, dass sie um wenige Zehntelmillimeter in Richtung Werkstück (200) vorsteht.

Weist nun die abzutastende Oberfläche des Werkstücks (200) eine Unstetigkeit wie zum Beispiel eine Nut (210) auf, kann die Tastrolle (11) lediglich um den eingestellten Wert, wie weit sie über den Tastschuh (21) in Richtung Werkstück (200) hervorsteht, in die Nut (210) eintauchen, bevor der Tastschuh (21) wie dargestellt mit dem Werkstück (200) in Kontakt kommt. Dadurch können unerwünschte Anfahrstöße zu dem Zeitpunkt, bei dem die Tastrolle (11) wieder mit dem Werkstück in Kontakt kommt, vermieden werden, da die Tastrolle (11) davon abgehalten wird, zu tief in eine Nut oder dergleichen einzutauchen. Die Situation, in dem die Tastrolle (11) wieder mit dem Werkstück in Kontakt gerät, und somit kurzzeitig beide Tasteinrichtungen (10, 20) mit dem Werkstück in Kontakt stehen, ist in Fig. 5c dargestellt.

## Patentansprüche

1. Tasteinrichtung (1) für Bearbeitungsvorrichtungen, insbesondere Bearbeitungsaggregate zur Bearbeitung von bevorzugt plattenförmigen Werkstücken, die bevorzugt zumindest abschnittsweise aus Holz, Holzwerkstoff und/oder Kunststoff bestehen, umfassend:
eine Tastrolleneinrichtung (10) mit mindestens einer Tastrolle (11),
eine Tastschuheinrichtung (20) mit mindestens einem Tastschuh (21),
eine Aufnahmeeinrichtung (30), und eine Zustelleinrichtung, wobei die Tastrolleneinrichtung (10) und die Tastschuheinrichtung (20) in der Aufnahmeeinrichtung (30) aufgenommen sind, und wobei die mindestens eine Tastrolle (11) oder der mindestens eine Tastschuh (21) mittels der Zustelleinrichtung in Richtung der Werkstückoberfläche zustellbar ist, insbesondere ein- und ausgerückt werden kann, **dadurch gekennzeichnet, dass**
die Tastrolleneinrichtung (10) und/oder die Tastschuheinrichtung (20) derart verstellbar sind, dass nur die mindestens eine Tastrolle (11) mit der Werkstückoberfläche in Kontakt kommt oder dass nur der mindestens eine Tastschuh (21) mit der Werkstückoberfläche in Kontakt kommt, oder dass beide mit der Werkstückoberfläche zumindest zeitweise simultan in Kontakt kommen.

2. Tasteinrichtung (1) nach Anspruch 1, wobei die Tastrolleneinrichtung (10), die Tastschuheinrichtung (20) und die Aufnahmeeinrichtung (30) als separate Bauteile ausgeführt sind, und/oder ein Tastbereich der mindestens einen Tastrolle (11) und ein Tastbereich des mindestens einen Tastschuhs (21) quer zu einer Abtastrichtung der Tasteinrichtung (1) nebeneinander und/oder in Abtastrichtung hintereinander angeordnet sind.

3. Tasteinrichtung (1) nach Anspruch 1 oder 2, wobei die Tastrolleneinrichtung (10) und die Tastschuheinrichtung (20) dazu eingerichtet sind, einen gemeinsamen Abtastbereich einer Werkstückoberfläche des abzutastenden Werkstücks abtasten zu können, und/oder die Tastrolleneinrichtung (10) und die Tastschuheinrichtung (20) dazu eingerichtet sind, einen gemeinsamen Abtastbereich zumindest zeitweise simultan abzutasten.

4. Tasteinrichtung (1) nach einem der vorhergehenden Ansprüche, bei der die Zustelleinrichtung bevorzugt pneumatisch, hydraulisch, elektrisch, magnetisch und/oder manuell betätigbar ist, und/oder die Tastrolleneinrichtung (10) und/oder die Tastschuheinrichtung (20) dazu eingerichtet sind, dass die mindestens eine Tastrolle (11) und/oder der mindestens eine Tastschuh (21) in etwa parallel zur Werkstückoberfläche verstellbar sind.

5. Tasteinrichtung (1) nach einem der vorhergehenden Ansprüche, bei der die mindestens eine Tastrolle (11) oder der mindestens eine Tastschuh (21) mittels der Zustelleinrichtung in Form einer Schwenkbewegung oder einer translatorischen Bewegung zustellbar ist, wobeidie translatorische Bewegung bevorzugt senkrecht zur Werkstückoberfläche oder schräg zur Werkstückoberfläche erfolgt.

6. Tasteinrichtung (1) nach einem der vorhergehenden Ansprüche, bei der die Zustelleinrichtung einen Schwenkarm (12) aufweist, und wobei die mindestens eine Tastrolle (11) mit dem Schwenkarm (12) schwenkbar an der Tastschuheinrichtung (20) oder der mindestens eine Tastschuh (21) mit dem Schwenkarm (12) schwenkbar an der Tastrolleneinrichtung (10) gelagert ist.

7. Tasteinrichtung (1) nach einem der vorhergehenden Ansprüche, bei der die Tastrolleneinrichtung (10) oder die Tastschuheinrichtung (20) zwei einstellbare Anschläge (13) aufweist, und wobei mittels der zwei einstellbaren Anschläge (13) jeweils eine Ein- und Ausrückposition der mindestens einen Tastrolle (11) oder des mindestens einen Tastschuhs (21) definierbar sind.

8. Tasteinrichtung (1) nach einem der vorhergehenden Ansprüche, bei der die mindestens eine Tastrolle (11) oder der mindestens eine Tastschuh (21) in Richtung Werkstück vorspannbar ist, insbesondere anhand einer Feder vorspannbar ist.

9. Tasteinrichtung (1) nach einem der vorhergehenden Ansprüche, bei der, wenn nur anhand der mindestens einen Tastrolle (11) eine Abtastung erfolgen soll, die mindestens eine Tastrolle (11) in einer eingerückten Position einen geringeren Abstand zum Werkstück als der Tastschuh (21) aufweist, und wobei die mindestens eine Tastrolle (11) bevorzugt bis 1,0 mm, besonders bevorzugt 0,05 bis 0,5 mm in Bezug auf den Tastschuh (21) hervorsteht.

10. Tasteinrichtung (1) nach einem der vorhergehenden Ansprüche, bei der wenn nur anhand des mindestens einen Tastschuhs (21) eine Abtastung erfolgen soll, die mindestens eine Tastrolle (11) in einer ausgerückten Position einen größeren Abstand zum Werkstück als der Tastschuh (21) aufweist, und wobei die mindestens eine Tastrolle (11) bevorzugt 0,1 mm in Bezug auf den Tastschuh (21) zurücksteht.

11. Tasteinrichtung (1) nach einem der vorhergehenden Ansprüche, bei der die Aufnahmeeinrichtung (30) Befestigungsmittel umfasst, um die Aufnahmeeinrichtung (30) an einem Bearbeitungsaggregat befestigen zu können.

12. Bearbeitungsvorrichtung, insbesondere Bearbeitungsaggregat zur Bearbeitung von bevorzugt plattenförmigen Werkstücken, die bevorzugt zumindest abschnittsweise aus Holz, Holzwerkstoff und/oder Kunststoff bestehen, mit einer Tasteinrichtung (1) nach einem der vorhergehenden Ansprüche 1 bis 11.

13. Verfahren zum Abtasten einer Werkstückoberfläche von bevorzugt plattenförmigen Werkstücken, die bevorzugt zumindest abschnittsweise aus Holz, Holzwerkstoff und/oder Kunststoff bestehen, mittels einer Tasteinrichtung (1) nach einem der Ansprüche 1 bis 11, umfassend:
Auswählen mindestens einer von einer Tastrolleneinrichtung (10), welche mindestens eine Tastrolle (11) aufweist, und einer Tastschuheinrichtung (20), welche mindestens einen Tastschuh (21) aufweist, der Tasteinrichtung (1),
wobei die mindestens eine Tastrolle (11) oder der mindestens eine Tastschuh (21) mittels einer Zustelleinrichtung der Tasteinrichtung in Richtung der Werkstückoberfläche zustellbar ist, insbesondere ein- und ausgerückt werden kann,
Zustellen der ausgewählten mindestens einen Tasteinrichtung (10, 20) an die Werkstückoberfläche, und
Abtasten der Werkstückoberfläche mittels der zugestellten mindestens einen Tasteinrichtung (10, 20),
wobei die Tastrolleneinrichtung (10) und/oder die Tastschuheinrichtung (20) derart verstellbar sind, dass nur die mindestens eine Tastrolle (11) mit der Werkstückoberfläche in Kontakt kommt oder dass nur der mindestens eine Tastschuh (21) mit der Werkstückoberfläche in Kontakt kommt, oder dass beide mit der Werkstückoberfläche zumindest zeitweise simultan in Kontakt kommen.

14. Verfahren nach Anspruch 13, wobei das Auswählen der mindestens einen Tasteinrichtung nach mindestens einem von folgenden Kriterien erfolgt:
Oberflächeneigenschaft des Werkstücks, Materialeigenschaft des Werkstücks, Größendimensionen des Werkstücks, Vorschubgeschwindigkeit des Werkstücks oder eines Bearbeitungsaggregates, an dem die Tasteinrichtung (10, 20) befestig ist, Vorhandensein von Schmutzpartikeln, Leimpartikeln, und dergleichen, Vorhandensein von Unstetigkeiten auf der Werkstückoberfläche usw.

15. Verfahren nach Anspruch 12 oder 13, bei dem das Zustellen der Tastrolle (11) und/oder des Tastschuhs (21) an die Werkstückoberfläche während eines Produktionswechsels, bei einem Heranfahren an das Werkstück und/oder während des Abtastens der Werkstückoberfläche vorgenommen wird.

## Claims

1. Sensor device (1) for machining tools, in particular machining units for machining preferably panel-formed workpieces which preferably consist at least partially of wood, wood-based material and/or plastic, comprising:
a sensing roller device (10) with at least one sensing roller (11),
a sensing shoe device (20) with at least one sensing shoe (21),
a mounting device (30),
and a presentation device, wherein the sensing roller device (10) and the sensing shoe device (20) are housed in the mounting device (30), and wherein the at least one sensing roller (11) or the at least one sensing shoe (21) can be presented in the direction of the workpiece surface, in particular advanced and withdrawn, by means of the presentation device, **characterised in that**
the sensing roller device (10) and/or the sensing shoe device (20) are adjustable in such a way that only the at least one sensing roller (11) comes into contact with the workpiece surface or that only the at least one sensing shoe (21) comes into contact with the workpiece surface, or that both come into contact with the workpiece surface simultaneously, at least at times.

2. Sensor device (1) according to claim 1, wherein the sensing roller device (10), the sensing shoe device (20) and the mounting device (30) are designed as separate components, and/or a sensing area of the at least one sensing roller (11) and a sensing area of the at least one sensing shoe (21) are arranged side by side, transversely to a scanning direction of the sensor device (1), and/or in succession in the scanning direction.

3. Sensor device (1) according to claim 1 or 2, wherein the sensing roller device (10) and the sensing shoe device (20) are configured to be able to scan a common scanning area of a workpiece surface of the workpiece which is to be scanned, and/or the sensing roller device (10) and the sensing shoe device (20) are configured to scan a common scanning area simultaneously, at least at times.

4. Sensor device (1) according to one of the preceding claims, wherein the presentation device is preferably pneumatically, hydraulically, electrically, magnetically and/or manually operable, and/or the sensing roller device (10) and/or the sensing shoe device (20) are configured such that the at least one sensing roller (11) and/or the at least one sensing shoe (21) are adjustable approximately parallel to the workpiece surface.

5. Sensor device (1) according to one of the preceding claims, wherein the at least one sensing roller (11) or the at least one sensing shoe (21) can be presented by means of the presentation device in the form of a swivel movement or a translational movement, wherein the translational movement is preferably perpendicular to the workpiece surface or oblique to the workpiece surface.

6. Sensor device (1) according to one of the preceding claims, wherein the presentation device has a swivel arm (12), and wherein the at least one sensing roller (11) is mounted swivelably on the sensing shoe device (20) via the swivel arm (12) or the at least one sensing shoe (21) is mounted swivelably on the sensing roller device (10) via the swivel arm (12).

7. Sensor device (1) according to one of the preceding claims, wherein the sensing roller device (10) or the sensing shoe device (20) has two adjustable stops (13), and wherein advanced and retracted positions of the at least one sensing roller (11) or the at least one sensing shoe (21) can be defined respectively by means of the two adjustable stops (13).

8. Sensor device (1) according to one of the preceding claims, wherein the at least one sensing roller (11) or the at least one sensing shoe (21) can be preloaded in the direction of the workpiece, in particular by means of a spring.

9. Sensor device (1) according to one of the preceding claims, wherein, if scanning is only to be carried out using the at least one sensing roller (11), in an advanced position the at least one sensing roller (11) is less distant from the workpiece than the sensing shoe (21), and wherein the at least one sensing roller (11) preferably projects by up to 1.0 mm, particularly preferably 0.05 to 0.5 mm, in relation to the sensing shoe (21) .

10. Sensor device (1) according to one of the preceding claims, wherein if scanning is only to be carried out using the at least one sensing shoe (21), in an advanced position the at least one sensing roller (11) is more distant from the workpiece than the sensing shoe (21), and wherein the at least one sensing roller (11) is preferably withdrawn by 0.1 mm in relation to the sensing shoe (21).

11. Sensor device (1) according to one of the preceding claims, wherein the mounting device (30) includes fastenings means allowing the mounting device (30) to be fastened to a machining unit.

12. Machining tool, in particular a machining unit for machining preferably panel-formed workpieces which preferably consist at least partially of wood, wood-based material and/or plastic, with a sensor device (1) according to one of the preceding claims 1 to 11.

13. Method for scanning a workpiece surface of preferably panel-formed workpieces which preferably consist at least partially of wood, wood-based material and/or plastic plate-shaped workpieces by means of a sensor device (1) according to one of claims 1 to 11, comprising:
Selecting at least one of a sensing roller device (10) of the sensor device (1) having at least one sensing roller (11) and a sensing shoe device (20) of the sensor device (1) having at least one sensing shoe (21),
wherein the at least one sensing roller (11) or the at least one sensing shoe (21) can be presented in the direction of the workpiece surface, in particular advanced and withdrawn, by means of a presentation device of the sensor device,
presenting the selected at least one sensor device (10, 20) to the workpiece surface, and
scanning the workpiece surface using the presented at least one sensor device (10, 20),
wherein the sensing roller device (10) and/or the sensing shoe device (20) are adjustable in such a way that only the at least one sensing roller (11) comes into contact with the workpiece surface or that only the at least one sensing shoe (21) comes into contact with the workpiece surface, or that both come into contact with the workpiece surface simultaneously, at least at times.

14. Method according to claim 13, wherein the selection of the at least one sensor device takes place on the basis of at least one of the following criteria:
Surface property of the workpiece, material property of the workpiece, size dimensions of the workpiece, advance speed of the workpiece or a machining unit to which the sensor device (10, 20) is fastened, presence of dirt particles, glue particles and the like, presence of irregularities on the workpiece surface etc.

15. Method according to claim 12 or 13, wherein the sensing roller (11) and/or the sensing shoe (21) are presented to the workpiece surface during a production change, when approaching the workpiece and/or during scanning of the workpiece surface.

## Revendications

1. Dispositif de palpage (1) pour des dispositifs d'usinage, en particulier groupes d'usinage pour l'usinage de pièces à usiner de préférence en forme de plaques, qui se composent de préférence au moins par sections de bois, de matériau à base de bois et/ou de matière plastique, comprenant :
un dispositif de rouleau de palpage (10) avec au moins un rouleau de palpage (11),
un dispositif de patin de palpage (20) avec au moins un patin de palpage (21),
un dispositif de réception (30),
et un dispositif d'avance, dans lequel le dispositif de rouleau de palpage (10) et le dispositif de patin de palpage (20) sont reçus dans le dispositif de réception (30),
et dans lequel l'au moins un rouleau de palpage (11) ou l'au moins un patin de palpage (21) peut être avancé au moyen du dispositif d'avance en direction de la surface de pièce à usiner, en particulier peut être engagé et désengagé, **caractérisé en ce que**
le dispositif de rouleau de palpage (10) et/ou le dispositif de patin de palpage (20) sont réglables de telle manière que seul l'au moins un rouleau de palpage (11) entre en contact avec la surface de pièce à usiner ou que seul l'au moins un patin de palpage (21) entre en contact avec la surface de pièce à usiner, ou que les deux entrent en contact avec la surface de pièce à usiner au moins temporairement simultanément.

2. Dispositif de palpage (1) selon la revendication 1, dans lequel le dispositif de rouleau de palpage (10), le dispositif de patin de palpage (20) et le dispositif de réception (30) sont réalisés comme composants séparés, et/ou une zone de palpage d'au moins un rouleau de palpage (11) et une zone de palpage d'au moins un patin de palpage (21) sont agencées transversalement à un sens de palpage du dispositif de palpage (1) l'une à côté de l'autre et/ou dans le sens de palpage l'une derrière l'autre.

3. Dispositif de palpage (1) selon la revendication 1 ou 2, dans lequel le dispositif de rouleau de palpage (10) et le dispositif de patin de palpage (20) sont conçus afin de pouvoir palper une zone de palpage commune d'une surface de pièce à usiner de la pièce à usiner à palper, et/ou le dispositif de rouleau de palpage (10) et le dispositif de patin de palpage (20) sont conçus afin de palper une zone de palpage commune au moins temporairement simultanément.

4. Dispositif de palpage (1) selon l'une quelconque des revendications précédentes, dans lequel le dispositif d'avance est actionnable de préférence pneumatiquement, hydrauliquement, électriquement, magnétiquement et/ou manuellement, et/ou le dispositif de rouleau de palpage (10) et/ou le dispositif de patin de palpage (20) sont conçus afin que l'au moins un rouleau de palpage (11) et/ou l'au moins un patin de palpage (21) soient réglables à peu près parallèlement à la surface de pièce à usiner.

5. Dispositif de palpage (1) selon l'une quelconque des revendications précédentes, dans lequel l'au moins un rouleau de palpage (11) ou l'au moins un patin de palpage (21) peut être avancé au moyen du dispositif d'avance sous la forme d'un mouvement de pivotement ou d'un mouvement de translation, dans lequel le mouvement de translation est effectué de préférence perpendiculairement à la surface de pièce à usiner ou en biais par rapport à la surface de pièce à usiner.

6. Dispositif de palpage (1) selon l'une quelconque des revendications précédentes, dans lequel le dispositif d'avance présente un bras de pivotement (12), et dans lequel l'au moins un rouleau de palpage (11) est logé de manière pivotante avec le bras de pivotement (12) au niveau du dispositif de patin de palpage (20) ou l'au moins un patin de palpage (21) est logé de manière pivotante avec le bras de pivotement (12) au niveau du dispositif de rouleau de palpage (10).

7. Dispositif de palpage (1) selon l'une quelconque des revendications précédentes, dans lequel le dispositif de rouleau de palpage (10) ou le dispositif de patin de palpage (20) présente deux butées (13) réglables, et dans lequel respectivement une position d'engagement et de désengagement d'au moins un rouleau de palpage (11) ou d'au moins un patin de palpage (21) peuvent être définies au moyen des deux butées (13) réglables.

8. Dispositif de palpage (1) selon l'une quelconque des revendications précédentes, dans lequel l'au moins un rouleau de palpage (11) ou l'au moins un patin de palpage (21) peut être précontraint en direction de la pièce à usiner, en particulier peut être précontraint à l'aide d'un ressort.

9. Dispositif de palpage (1) selon l'une quelconque des revendications précédentes, dans lequel lorsqu'un palpage doit être effectué seulement à l'aide d'au moins un rouleau de palpage (11), l'au moins un rouleau de palpage (11) présente dans une position engagée une distance moindre par rapport à la pièce à usiner que le patin de palpage (21), et dans lequel l'au moins un rouleau de palpage (11) dépasse de préférence jusqu'à 1,0 mm, le plus préférentiellement de 0,05 à 0,5 mm par rapport au patin de palpage (21).

10. Dispositif de palpage (1) selon l'une quelconque des revendications précédentes, dans lequel lorsqu'un palpage doit être effectué seulement à l'aide d'au moins un patin de palpage (21), l'au moins un rouleau de palpage (11) présente dans une position désengagée une distance plus grande par rapport à la pièce à usiner que le patin de palpage (21), et dans lequel l'au moins un rouleau de palpage (11) recule de préférence de 0,1 mm par rapport au patin de palpage (21).

11. Dispositif de palpage (1) selon l'une quelconque des revendications précédentes, dans lequel le dispositif de réception (30) comporte des moyens de fixation afin de pouvoir fixer le dispositif de réception (30) à un groupe d'usinage.

12. Dispositif d'usinage, en particulier groupe d'usinage pour l'usinage de pièces à usiner de préférence en forme de plaque qui se composent de préférence au moins par sections de bois, de matériau à base de bois et/ou de matière plastique, avec un dispositif de palpage (1) selon l'une quelconque des revendications précédentes 1 à 11.

13. Procédé de palpage d'une surface de pièce à usiner de pièces à usiner de préférence en forme de plaque qui se composent de préférence au moins par sections de bois, de matériau à base de bois et/ou de matière plastique, au moyen d'un dispositif de palpage (1) selon l'une quelconque des revendications 1 à 11, comprenant :
la sélection d'au moins un d'un dispositif de rouleau de palpage (10) qui présente au moins un rouleau de palpage (11), et d'un dispositif de patin de palpage (20) qui présente au moins un patin de palpage (21), le dispositif de palpage (1),
dans lequel l'au moins un rouleau de palpage (11) ou l'au moins un patin de palpage (21) peut être avancé au moyen d'un dispositif d'avance du dispositif de palpage en direction de la surface de la pièce à usiner, en particulier peut être engagé et désengagé,
l'avance d'au moins un dispositif de palpage (10, 20) sélectionné de la surface de pièce à usiner, et
le palpage de la surface de pièce à usiner au moyen d'au moins un dispositif de palpage (10, 20) avancé,
dans lequel le dispositif de rouleau de palpage (10) et/ou le dispositif de patin de palpage (20) sont réglables de telle manière que seul l'au moins un rouleau de palpage (11) entre en contact avec la surface de pièce à usiner ou que seul l'au moins un patin de palpage (21) entre en contact avec la surface de pièce à usiner, ou que les deux entrent en contact avec la surface de pièce à usiner au moins temporairement simultanément.

14. Procédé selon la revendication 13, dans lequel la sélection d'au moins un dispositif de palpage est effectuée selon au moins un des critères suivants :
propriété de surface de la pièce à usiner, propriété de matériau de la pièce à usiner, dimensions de la pièce à usiner, vitesse d'avance de la pièce à usiner ou d'un groupe d'usinage, auquel le dispositif de palpage (10, 20) est fixé, présence de particules de salissure, particules de colle, et analogues, présence de discontinuités sur la surface de pièce à usiner, etc.

15. Procédé selon la revendication 12 ou 13, dans lequel l'avance du rouleau de palpage (11) et/ou du patin de palpage (21) de la surface de pièce à usiner est entreprise pendant un changement de production, lors d'une approche de la pièce à usiner et/ou pendant le palpage de la surface de la pièce à usiner.
